# EUROPÄISCHE PATENTANMELDUNG

(11) **EP 0 978 928 A2**
(43) Veröffentlichungstag der Anmeldung: **09.02.2000**
(21) Anmeldenummer: 99108844.4
(22) Anmeldetag: 04.05.1999
(51) Int. Cl.: H02K 7/00, H02K 7/11

(54) **Elektrische Maschine, insbesondere Drehstromgenerator**

(30) Priorität: 01.08.1998 DE 29813809 U
(71) Anmelder: ROBERT BOSCH GMBH, 70442 Stuttgart (DE)
(72) Erfinder: Bolz, Martin-Peter, 71720 Oberstenfeld (DE); Kappenstein, Ulrich, 75438 Knittlingen (DE)

(57) **Zusammenfassung**

Die erfindungsgemäße elektrische Maschine, insbesondere Drehstromgenerator, weist einen das Gehäuse derselben umspülenden Wassermantel auf, wobei das Kühlwasser durch eine Pumpe (26) gefördert wird. Ein Pumpenrad (20) wird von der Maschine über zwei, als Magnetkupplung dienende, Magnetscheiben (19, 23) angetrieben, von denen sich eine auf der Welle (21) des Pumpenrads (20) befindet und die andere von der Pumpe durch einen Gehäusedeckel (17) getrennt am Ende der Generatorwelle (14) befestigt ist. Die Magnetscheiben bestehen aus Permanentmagneten, und die Rotation der Generatorwelle wird über das Magnetfeld von der ersten auf die mit dem Pumpenrad verbundene zweite Magnetscheibe übertragen. Die einfach gestaltete Pumpe kann im Störfall leicht ausgewechselt werden.

## Beschreibung

### Stand der Technik

Die Erfindung geht aus von einer elektrischen Maschine, insbesondere einem Drehstromgenerator nach der Gattung des Hauptanspruchs. Wesentlich ist bei solchen Generatoren, insbesondere bei Startergeneratoren mit großer elektrischer Leistung, die einerseits als Motor zum Starten einer Brennkraftmaschine sowie als Generator zur elektrischen Versorgung des Bordnetzes in Kraftfahrzeugen betrieben werden, daß eine gute Kühlung, insbesondere eine Wasserkühlung vorhanden ist.

Aus der DE-OS 34 17 307 ist es bekannt, im Gehäuse des Generators eine Kühlwasserpumpe anzuordnen, die von der Generatorwelle angetrieben ist und das für die Kühlung des Generators erforderliche Kühlwasser fördert. Nachteilig ist, daß die in das Gehäuse des Generators integrierte Pumpe voluminös baut und beispielsweise beim Ausfall derselben mitsamt dem Generator ausgewechselt werden muß und sodann relativ aufwendig zu reparieren ist.

### Vorteile der Erfindung

Die erfindungsgemäße elektrische Maschine mit den kennzeichnenden Merkmalen des Hauptanspruchs hat demgegenüber den Vorteil, daß die Kühlwasserpumpe separat an der Maschine angebracht ist, daß sie relativ kompakt ausgebildet ist, damit leicht wird und, was inbesondere bei Generatoren für Kraftfahrzeuge wichtig ist, daß eine gute Auswechselbarkeit und Zugänglichkeit bei Reparaturen gegeben ist. Weitere Vorteile der Erfindung ergeben sich aus den Unteransprüchen, der nachfolgenden Beschreibung und der Zeichnung.

### Zeichnung

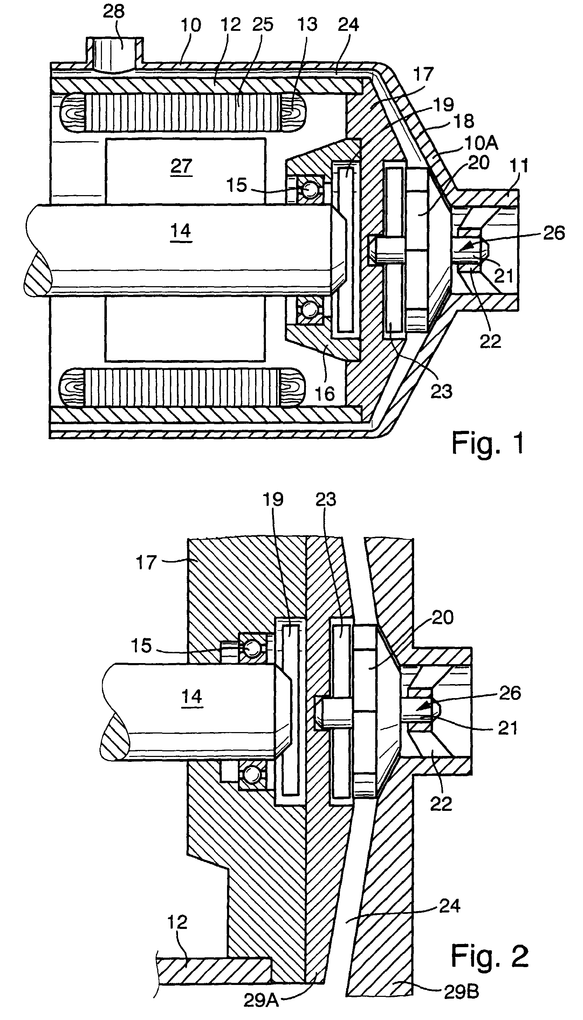

Es zeigen Figur 1 einen schematisierten Teilschnitt durch einen Starter-Generator und Figur 2 als weitere Ausführungsform einen Ausschnitt der elektrischen Maschine mit der Kühlwasserpumpe am hinteren Lagerbereich.

### Beschreibung der Ausführungsbeispiele

In der Figur 1 ist mit 10 ein topfförmiges Außengehäuse des Starter-Generators bezeichnet, das an seinem Boden 10A einen zylindrischen Wassereinlaß 11 aufweist. An der Innenwand des Außengehäuses 10 befinden sich z.B. mäanderförmig über den Umfang ausgebildete Kühlkanäle 24 für das Kühlwasser, die nach innen durch ein Ständergehäuse 12 begrenzt sind. Im Ständergehäuse sitzt ein Ständerblechpaket 25 mit einer Ständerwicklung 13. Die Welle 14 des Generators ist nur teilweise gezeichnet und auf der dem Gehäuseboden 17 zugewandten Seite in einem Kugellager 15 gelagert, das in einem Einsatz 16 des Gehäusebodens 17 angeordnet ist. In diesen Einsatz ragt auch das eine Ende der Welle 14 hinein, auf dem eine Magnetscheibe 19 fest angeordnet ist. Zwischen dem Gehäuseboden 17 und dem Boden 10A des Außengehäuses 10 ist das Pumpenrad 20 einer Wasserpumpe 26 auf einer Pumpenwelle 21 befestigt, die achsgleich zur Welle 14 der elektrischen Maschine verläuft. Die Welle 21 ist einerseits gelagert im Gehäuseboden 17 und andererseits in einem im Wassereinlauf 11 an Streben angeordneten Lager 22. Neben dem Pumpenrad 20 sitzt auf der Welle 21 und dem Gehäuseboden 17 zugewandt ebenfalls drehfest eine Magnetscheibe 23 mit demselben Durchmesser wie die Magnetscheibe 19. Beide Magnetscheiben 19 und 23 sind als Dauermagneten mit segmentförmig abwechselnden Nord- und Südpolen versehen und bilden eine Magnetkupplung, wobei der dazwischen liegende Gehäuseboden 17 aus einem magnetisch neutralen Material wie Aluminium, Kunststoff oder dgl. hergestellt ist. Die Kühlkanäle 24 bilden einen Kühlwassermantel, der bis in den Boden 18 des Außengehäuses 10 reicht und von dort über die Wasserpumpe 26 zum wassereinlauf 11 geführt ist.

Die Welle 14 des Starter-Generators samt seinem darauf sitzenden Rotor 27 wird von einer nicht dargestellten Riemenscheibe, beispielsweise vom Motor eines Kraftfahrzeugs angetrieben. Damit rotiert auch die Magnetscheibe 19, und deren mitrotierendes Magnetfeld setzt auch die Magnetscheibe 23 in Rotation und damit das Pumpenrad 20. Dieses saugt Kühlwasser über den Wassereinlaß 11 an und führt es in den Kühlwassermantel. Von dort wird das Kühlwasser über den Auslaß 28 und einen nicht dargestellten Wasserschlauch in das Kühlwassersystem des Kfz-Motors zurückgeführt. Der Kühlwasserkreislauf wird dadurch geschlossen, daß der Wassereinlaß 11 über einen weiteren Schlauch am Kühlwassersystem, vorzugsweise hinter dem Wasserkühler des Kfz-Motors angeschlossen wird.

Figur 2 zeigt als weiters Ausführungsbeispiel den Pumpenbereich der elektrischen Maschine aus Figur 1 mit gleichen Bezugszahlen für gleiche Teile. Dort ist jedoch das Kugellager 15 für die Maschinenwelle 14 unmittelbar in den Gehäuseboden 17 eingesetzt und das Pumpenrad 20 ist mit der Welle 21 in einem zweiteiligen Pumpengehäuse 29A und 29B aufgenommen. Auch hier ist das Gehäuseteil 29A zwischen den beiden Magnetscheiben 19 und 23 aus einem magnetisch unwirksamen Material hergestellt. Im Störungsfall kann somit die Wasserpumpe separat von der elektrischen Maschine gewechselt und repariert werden.

## Patentansprüche

1. Elektrische Maschine, insbesondere Drehstromgenerator, mit einer in deren Ständergehäuse (12) gelagerten, den Rotor (27) tragenden Welle (14), mit einem an der Innenseite des Gehäuses (12) befestigten, den Rotor umfassenden Blechpaket (25) samt Ständerwicklung (13) sowie mit einer von der Welle (14) angetriebenen Pumpe (26) für die Kühlung eines das Gehäuse (12) umgebenden Wassermantels (24), dadurch gekennzeichnet, daß die Pumpe (26) in einem vom Inneren des Gehäuses (12) getrennten Bereich (17, 10A; 29A, 29B) angeordnet ist und daß auf der Pumpenwelle (21) neben dem Pumpenrad (20) eine Magnetscheibe (23) angeordnet ist, die mit einer ebensolchen, auf der Welle (14) der Maschine angeordneten Magnetscheibe (19) in Wirkverbindung steht, wobei die beiden Magnetscheiben (19, 23) durch eine magnetisch unwirksame Wand (17; 29A) voneinander räumlich getrennt sind.

2. Maschine nach Anspruch 1, dadurch gekennzeichnet, daß die Magnetscheiben (19, 23) Permanentmagnete aufweisen und daß die eine Magnetscheibe (19), die auf der dem Pumpenrad abgewandten Seite der Wand (17, 29A) angeordnet ist, auf dem einen Ende der Maschinenwelle (14) drehfest befestigt ist.

3. Maschine nach Anspruch 1 und/oder 2, dadurch gekennzeichnet, daß am Boden (10A) eines das Ständergehäuse (12) umgebenden Außengehäuses (10) ein zentraler Wassereinlauf (11) ausgebildet ist, in dem sich eine Lagerstelle (22) für die Pumpenwelle (21) befindet.

4. Maschine nach Anspruch 3, dadurch gekennzeichnet, daß die Pumpenwelle (21) in der Wand (17; 29A) zwischen den beiden Magnetscheiben (19, 23) gelagert ist.

5. Maschine nach einem der Ansprüche 1 bis 4, dadurch gekennzeichnet, daß die Magnetscheiben (19, 23) durch einen am Ende des Ständergehäuses (10) angeordneten Gehäuseboden (17) voneinander getrennt sind, in dem sich die zweite Lagerstelle für die Pumpenwelle (21) befindet.
